# EUROPEAN PATENT SPECIFICATION

(11) **EP 2 884 724 B1**
(45) Date of publication and mention of the grant of the patent: **14.06.2017**
(21) Application number: 13828626.5
(22) Date of filing: 07.08.2013
(51) Int. Cl.: H04M 1/64, H04M 1/725, H04W 4/16, H04M 3/42, H04M 3/432

(54) **COMMUNICATION TERMINAL, CONTROL METHOD, AND PROGRAM**
KOMMUNIKATIONSENDGERÄT, STEUERVERFAHREN DAFÜR UND PROGRAMM
TERMINAL DE COMMUNICATION, PROCÉDÉ DE COMMANDE ET PROGRAMME

(30) Priority: 10.08.2012 JP 2012178177
(43) Date of publication of application: 17.06.2015
(73) Proprietor: NTT DOCOMO, INC., Chiyoda-ku Tokyo 100-6150 (JP)
(72) Inventor: HASHIDA, Naoki, Tokyo 100-6150 (JP); KURISU, Toshiharu, Tokyo 100-6150 (JP); MASUDA, Kyoko, Tokyo 100-6150 (JP); TSUGE, Yuki, Tokyo 100-6150 (JP); NARA, Sachiko, Tokyo 100-6150 (JP)
(74) Representative: Hoffmann Eitle
(86) International application number: PCT/JP2013/071379
(87) International publication number: WO 2014/024925

(56) References cited:
- JP-A- 2003 143 301
- JP-A- 2005 197 775
- JP-A- 2008 061 278
- US-A1- 2004 203 794
- US-A1- 2009 067 593

## Description

### Technical Field

The present invention relates to a technique for responding to an incoming call using a speech operation.

### Background Art

Techniques have been developed for use with a communication terminal such as a mobile phone, whereby a response to an incoming call is sent when a user cannot take the call. For example, in an invention described in Patent Document 1, plural return messages are pre-registered, and when a call is received, a return message is sent to a caller, which message has been selected by a user or has been automatically selected in accordance with a condition such as an identity of a caller or a time of receiving the call. In an invention described in Patent Document 2, when a call is received, and a phone number and a mail address of the caller are pre-registered in a phonebook, a document including schedule data is automatically sent to the caller by email.

### Prior Art Document

### Patent Document

Patent Document 1: JP 2000-32122 A1
Patent Document 2: JP 2002-344652 A1

### Summary of the Invention

### Problems to be solved by the Invention

However, in the invention described in Patent Document 1, although a response can be made to an incoming call according to a caller, without the need for a phone conversation, a notification cannot be made by a recipient to a caller as to a time when the recipient will return the call. In the invention described in Patent Document 2, although a caller is able to know the schedule of a recipient since schedule data is sent to the caller, a notification cannot be made by the recipient to the caller as to a time when the recipient will return the call.

The present invention has been made in view of the circumstances described above, and it is an object of the present invention to enable a recipient of an incoming call, who is not able to take part in a phone conversation at the time of receiving the call, to notify a caller of a time when the recipient will return the call, without the need to have a phone conversation with the caller.

US 2009/067593 A1 relates to a method for dynamically assembling voice messages at a wireless communication device. Here, the wireless communication device has a call-answering module configured to answer incoming calls automatically for the user. Before alerting the user, the call-answering module accesses a calendar application executing on the user's device and retrieves scheduled event information for the user. This permits the call-answering module to determine the user's status, such as whether the user is currently in a meeting and when the user will be available to return the call. Based on that information, the call-answering module selects one or more prerecorded voice message segments stored in a memory of the device.

US 2004/203794 A1 relates to a system and method for providing an automatic response to a telephone call. Here, a response algorithm may involve searching a calendar or other database to compare the current time with the planned event and choosing an appropriate auto-response. For example, a user could have a calendar on their phone and have the response algorithm query the calendar to determine where the user may be when a call is received. In this embodiment, if a user is scheduled to be in a meeting, an auto-response tells the caller that the user is in a meeting, and will respond after the meeting. In another case, if a user was at dinner (and that engagement was in the calendar), a different and equally appropriate message could be used. A default message could be used in cases where no engagement was in the calendar. Time could also be a factor in the response algorithm-after reviewing the calendar, it could be determined that less than five minutes were left in a meeting and a message to that effect could be used (e.g., "I'm currently in a meeting, but should be able to call you within five minutes or so").

### Means for Solving the Problems

To solve the problem, the present invention provides a communication terminal comprising the features of claim 1.

In a preferred aspect, the communication terminal may further comprise: a voice collecting means; and an acquiring means for acquiring speech data representing a speech collected by the voice collecting means, the identifying means identifying the time upon detecting that an operation identified by performing a speech recognition processing on the speech data acquired by the acquiring means is not an operation for requesting starting a phone conversation in response to the received call.

In a further preferred aspect, the storage control unit may store the schedule data in the storage means only upon detecting that a signal has been received from the communication device that has originated the call, the signal requesting a reply to the call.

The present invention also provides a control method for a communication terminal, comprising the steps of claim 4.

The present invention also provides a program for causing a computer to execute the steps of claim 5.

### Effects of the Invention

According to the present invention, a recipient of an incoming call, who is not able to take part in a phone conversation at the time of receiving the call, is enabled to notify a caller of
a time when the recipient will return the call, without the need to have a phone conversation with the caller.

### Brief Description of the Drawings

Fig. 1 is a diagram showing a configuration of communication system 100.
Fig. 2 is a block diagram showing a hardware configuration of communication terminal 1.
Fig. 3 is a diagram showing an example of a data configuration of schedule list 121.
Fig. 4 is a diagram showing an example of a screen displayed by a scheduler.
Fig. 5 is a diagram showing an example of a data configuration of phonebook data 122.
Fig. 6 is a diagram showing an example of a data configuration of operation list 123.
Fig. 7 is a diagram showing a configuration of functions realized by control unit 11.
Fig. 8 is a diagram showing an example of a data configuration of schedule list 121.
Fig. 9 is a block diagram showing a hardware configuration of speech recognition server 2.
Fig. 10 is a flowchart of an operation performed when a response is made to an incoming call using a speech operation.
Fig. 11 is a diagram showing an example of a screen displayed by a scheduler.

### Modes for Implementing the Invention

### 1. Embodiment

### 1-1. Configuration

### 1-1-1. Communication System 100

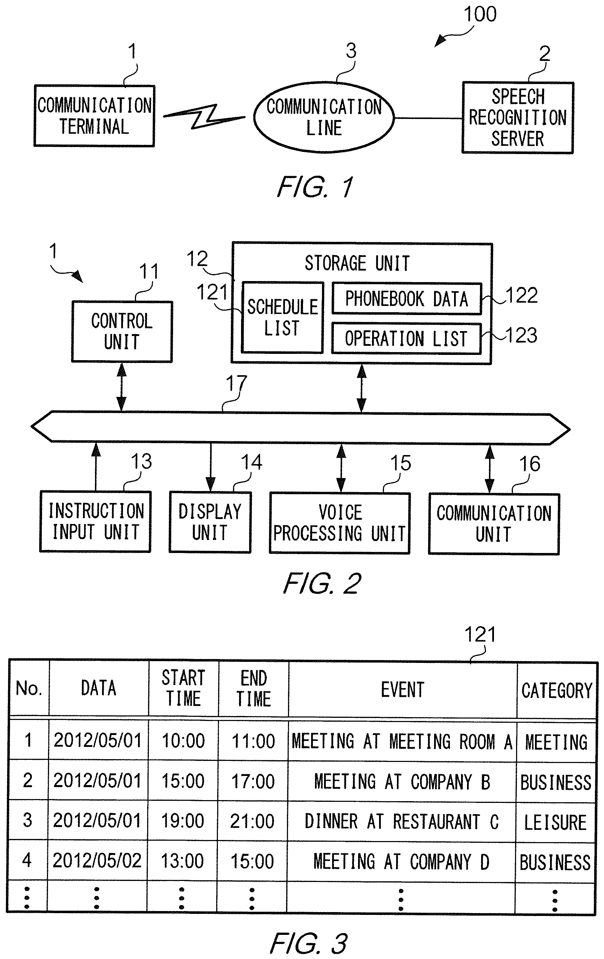

Fig. 1 is a diagram showing a configuration of communication system 100 according to the present embodiment. Communication system 100 is a distributed speech recognition system. Communication system 100 includes communication terminal 1 and speech recognition server 2, as shown in Fig. 1. Communication terminal 1 and speech recognition server 2 are connected with each other via communication line 3. Communication line 3 is, for example, a network including a mobile communication network and the Internet. It is to be noted that although a single communication terminal 1 and a single speech recognition server 2 are shown in Fig. 1, two or more communication terminals 1 and two or more speech recognition servers 2 may be provided.

### 1-1-2. Communication Terminal 1

Communication terminal 1 shown in Fig. 1 is a computer capable of performing a processing according to an operation (speech operation) performed by a user using his/her speech. Communication terminal 1 may be, for example, a mobile phone, a smartphone, a PDA (Personal Digital Assistant), a tablet terminal, or a personal computer. Fig. 2 is a block diagram showing a hardware configuration of communication terminal 1. Communication terminal 1 includes control unit 11, storage unit 12, instruction input unit 13, display unit 14, voice processing unit 15, and communication unit 16, as shown in Fig. 2. The units are connected with each other via bus 17.

Control unit 11 includes a CPU (Central Processing Unit), a ROM (Read Only Memory), a RAM (Random Access Memory), and a timer. The CPU executes a program stored in the ROM or storage unit 12 to control components of communication terminal 1. The timer keeps time.

Storage unit 12 is a storage device such as an EEPROM (Electronically Erasable and Programmable ROM) or a flash memory. Storage unit 12 stores programs and data used by the CPU. Storage unit 12 may store an application program for managing schedule data (scheduler). Storage unit 12 also stores schedule list 121, phonebook data 122, and operation list 123, which are described later. Storage unit 12 may be a detachable storage device such as a UIM (User Identity Module) card or a SIM (Subscriber Identity Module) card.

Instruction input unit 13 may comprise operation keys such as numeric keys or a touch panel, and outputs a signal to control unit 11 in accordance with an operation performed by a user. Display unit 14 is a display device such as a liquid crystal display, which unit displays an image under control of control unit 11. Voice processing unit 15 includes a microphone, a speaker, and a voice processing circuit such as a DSP (Digital Signal Processor). Voice processing unit 15 outputs voice data representing a voice collected by the microphone to control unit 11, and outputs a sound represented by a signal input from control unit 11, through the speaker. Voice processing unit 15 is an example of a "voice collecting means" according to the present invention. Communication unit 16 is an interface card for communicating with an external device through communication line 3.

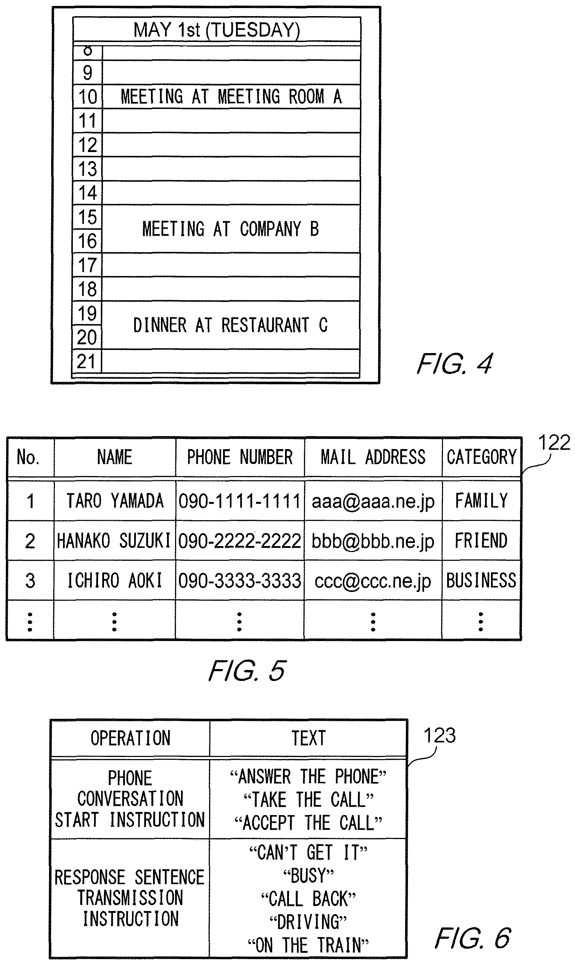

Fig. 3 is a diagram showing an example of a data configuration of schedule list 121 stored in storage unit 12. Schedule list 121 is a list for managing items of schedule data of a user of communication terminal 1. Each item of schedule data constituting schedule list 121 includes data on a date, a start time, an end time, an event, and a category, as shown in Fig. 3. A category herein refers to information indicative of a type of an event such as business, meeting, study, or leisure. Each item of schedule data is registered by a user by use of instruction input unit 13. When the scheduler described above is executed, a screen shown in Fig. 4 is displayed on display unit 14 based on schedule list 121.

Fig. 5 is a diagram showing an example of a data configuration of phonebook data 122 stored in phonebook data 122. Phonebook data 122 is a list for managing items of contact information. Each item of contact information constituting phonebook data 122 includes data on a name, a phone number, a mail address, and a category, as shown in Fig. 5. A category herein refers to data indicative of a relationship between a user to be contacted and a user of communication terminal 1, such as family, friend, or business. Each item of contract information is registered by a user by use of instruction input unit 13. Each item of contract information may be input from an external memory.

Fig. 6 is a diagram showing an example of a data configuration of operation list 123 stored in storage unit 12. Operation list 123 is a list for managing operations requested using a user's speech. Specifically, operation list 123 is a list for managing sets of a text obtained as a result of recognition of a user's speech and a corresponding operation. In the example shown in Fig. 6, an operation "PHONE CONVERSATION START INSTRUCTION" is associated with a text (a character string) "ANSWER THE PHONE."

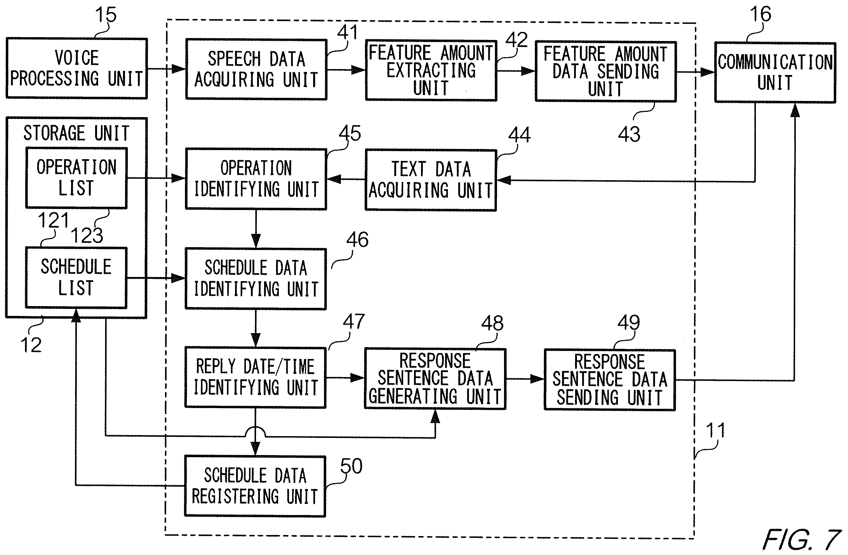

Fig. 7 is a diagram showing a configuration of functions realized by control unit 11. The functions shown in Fig. 7, especially, relate to an operation performed when a response is made to an incoming call using a speech operation. The functions are realized by execution of a program stored in storage unit 12 by the CPU.

Speech data acquiring unit 41 acquires speech data representing a user's speech from voice processing unit 15. Speech data herein refers to, for example, speech waveform data representing a waveform of a speech. Speech data acquiring unit 41 is an example of an "acquiring means" according to the present invention. Feature amount extracting unit 42 extracts a feature amount necessary for speech recognition from speech data acquired by speech data acquiring unit 41. Specifically, feature amount extracting unit 42 performs an acoustic analysis of speech waveform data to generate a feature vector.

Feature amount sending unit 43 sends feature amount data representing a feature amount extracted by feature amount extracting unit 42 to speech recognition server 2 via communication unit 16. The feature amount data sent by feature amount sending unit 43 is subjected to a speech recognition processing (described later) in speech recognition server 2 so that the data is converted into text data. Text data acquiring unit 44 acquires text data sent from speech recognition server 2, via communication unit 16.

Operation identifying unit 45 identifies an operation represented by text data acquired by text data acquiring unit 44. Specifically, operation identifying unit 45 identifies an operation associated with a text represented by acquired text data in operation list 123. For example, in a case where text data acquired by text data acquiring unit 44 represents a text "ANSWER THE PHONE," an operation "PHONE CONVERSATION START INSTRUCTION" is identified in the example shown in Fig. 6.

Schedule data identifying unit 46 identifies schedule data corresponding to a present date and time with reference to schedule list 121 in a case where an operation identified by operation identifying unit 45 is not an operation for requesting starting a phone conversation in response to an incoming call. The case herein refers to a case where the operation is an operation for requesting sending of a response sentence. Specifically, schedule data identifying unit 46 identifies a present date and time by referring to the timer, and identifies schedule data corresponding to the identified date and time. For example, in a case where a present date and time kept by the timer is "2012/05/01, 10:30," schedule data having an event "MEETING AT MEETING ROOM A" is identified in the example shown in Fig. 3. Namely, schedule data identifying unit 46 identifies schedule data whose date matches a present date kept by the timer, and between whose start time and end time a present time kept by the timer is included.

Reply date/time identifying unit 47 identifies a date and time when a reply will be made to a received call, based on schedule data identified by schedule data identifying unit 46. Specifically, reply date/time identifying unit 47 identifies an end time of identified schedule data as a time for reply. For example, in the example shown in Fig. 3, in a case where schedule data having an event "MEETING AT MEETING ROOM A" is identified by schedule data identifying unit 46, reply date/time identifying unit 47 identifies a time "11:00" as a time for reply. Reply date/time identifying unit 47 is an example of an "identifying means" according to the present invention.

Response sentence data generating unit 48 generates voice data of a response sentence informing that a reply will be made on a data and time identified by reply date/time identifying unit 47. Specifically, response sentence data generating unit 48 retrieves a template of voice data of a response sentence from storage unit 12, and embeds, in the template, voice data indicating a date and time identified by reply date/time identifying unit 47 to generate voice data of a response sentence.

A template of voice data of a response sentence herein refers to voice data indicating a message such as "The call cannot be answered at the moment. A reply will be made at %T." The symbol "%T" refers to a parameter to which a date and time are set. For example, in a case where a time identified by reply date/time identifying unit 47 is "11:00," voice data of a response sentence "The call cannot be answered at the moment. A reply will be made at eleven." is generated. Response sentence data generating unit 48 is an example of a "generating means" according to the present invention.

Response sentence data sending unit 49 sends voice data of a response sentence generated by response sentence data generating unit 48 to a communication device of a caller via communication unit 16. Response sentence data sending unit 49 is an example of a "first sending means" according to the present invention.

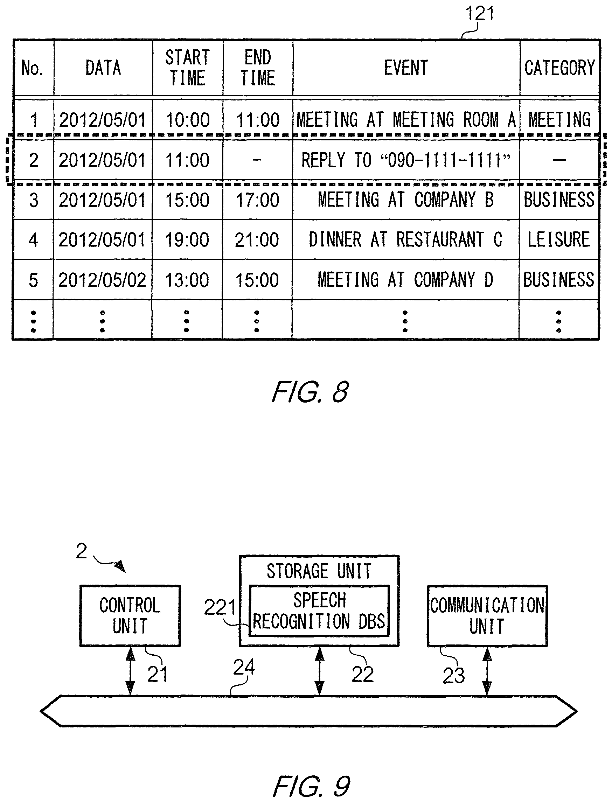

Schedule data registering unit 50 registers, in schedule list 121 as schedule data, an event "reply" whose date and time has been identified by reply date/time identifying unit 47. Specifically, schedule data registering unit 50 registers schedule data in schedule list 121, whose event is "reply" and whose start time is a time identified by reply date/time identifying unit 47. For example, in a case where schedule list 121 is configured as shown in Fig. 3, a time identified by reply date/time identifying unit 47 is "11:00," and a phone number of a caller is "090-1111-1111," new schedule data is registered as shown in Fig. 8. Schedule data registering unit 50 is an example of a "storage control means" according to the present invention.

The foregoing is a description of a configuration of communication terminal 1.

### 1-1-3. Speech Recognition Server 2

Speech recognition server 2 shown in Fig. 1 is a computer that performs a speech recognition processing based on feature amount data sent by communication terminal 1 to generate text data. Fig. 9 is a block diagram showing a hardware configuration of speech recognition server 2. Speech recognition server 2 includes control unit 21, storage unit 22, and communication unit 23, as shown in Fig. 9. The units are connected with each other via bus 24.

Control unit 21 includes a CPU, a ROM, and a RAM. The CPU executes a program stored in the ROM or storage unit 22 to control components of speech recognition server 2. Storage unit 22 is a storage device such as an HDD (Hard Disk Drive), which unit stores programs to be executed by the CPU. Storage unit 22 also stores speech recognition databases (DBs) 221. Speech recognition DBs 221 may be, for example, an acoustic model DB, a language model DB, and a dictionary DB. Communication unit 23 is an interface card for communicating with an external device via communication line 3.

When control unit 21 acquires feature amount data sent by communication terminal 1 via communication unit 23, control unit 21 performs a speech recognition processing on the feature amount data with reference to speech recognition DBs 221. Subsequently, control unit 21 sends text data generated as a result of the speech recognition processing to communication terminal 1 via communication unit 23. It is to be noted that data sent to communication terminal 1 may be data other than text data, as long as such data represents a character string generated as a result of speech recognition.

The foregoing is a description of a configuration of speech recognition server 2.

### 1-2. Operation

Now, an operation of communication terminal 1 according to the present embodiment will be described. Specifically, an operation of communication terminal 1 performed when a response is made to an incoming call using a speech operation will be described.

It is to be noted that before a speech operation is performed, a predetermined operation is performed by a user by use of instruction input unit 13. Specifically, for example, when an alert screen for notifying an incoming call is displayed on display unit 14, and an operation is performed by a user to enable input of a speech by use of instruction input unit 13, a speech operation becomes available.

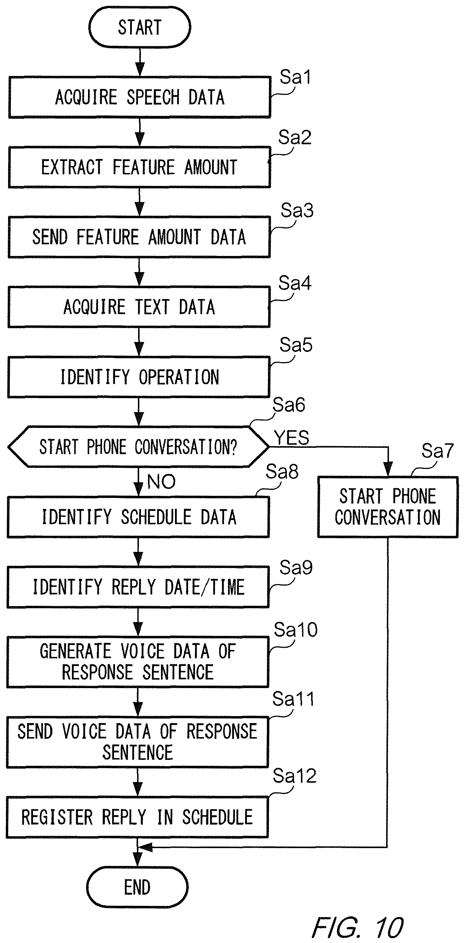

Fig. 10 is a flowchart of an operation performed when a response is made to an incoming call using a speech operation. At step Sa1 shown in Fig. 10, control unit 11 of communication terminal 1 acquires speech data representing a user's speech from voice processing unit 15. Subsequently, control unit 11 extracts a feature amount necessary for speech recognition from the speech data acquired at step Sa1 (step Sa2).

Subsequently, control unit 11 sends feature amount data representing a feature amount extracted at step Sa2 to speech recognition server 2 via communication unit 16 (step Sa3). The feature amount data sent by control unit 11 is subjected to a speech recognition processing in speech recognition server 2 so that the data is converted into text data. Subsequently, control unit 11 acquires the text data sent from speech recognition server 2, via communication unit 16 (step Sa4).

Subsequently, control unit 11 identifies an operation represented by the text data acquired at step Sa4 (step Sa5). Specifically, control unit 11 identifies an operation associated with a text represented by the acquired text data in operation list 123.

Subsequently, control unit 11 determines whether the operation identified at step Sa5 is an operation for requesting starting a phone conversation in response to the incoming call (step Sa6). As a result of the determination, if the operation identified at step Sa5 is an operation for requesting starting a phone conversation in response to the incoming call (step Sa6; YES), control unit 11 starts a phone conversation with a communication device of a caller (step Sa7).

On the other hand, as a result of the determination, if the operation identified at step Sa5 is not an operation for requesting starting a phone conversation in response to the incoming call (step Sa6; NO), control unit 11 starts a processing for sending a response sentence to the communication device of the caller. Specifically, control unit 11 initially identifies schedule data corresponding to a present date and time with reference to schedule list 121 (step Sa8). When doing so, control unit 11 identifies a present date and time by referring to the timer, and identifies schedule data corresponding to the identified date and time in schedule list 121.

Subsequently, control unit 11 identifies a date and time when a reply will be made to the received call, based on the schedule data identified at step Sa8 (step Sa9). Specifically, control unit 11 identifies, as a time for reply, an end time of the schedule data identified at step Sa8. Subsequently, control unit 11 generates voice data of a response sentence notifying that a reply will be made on the data and time identified at step Sa9 (step Sa10). Specifically, control unit 11 retrieves a template of voice data of a response sentence from storage unit 12, and embeds, in the template, voice data indicating the date and time identified at step Sa9 to generate voice data of a response sentence.

Subsequently, control unit 11 sends the voice data of a response sentence generated at step Sa10 to the communication device of the caller via communication unit 16 (step Sa11). Subsequently, control unit 11 registers, in schedule list 121 as schedule data, an event "reply" whose date and time was identified at step Sa9 (step Sa12). Specifically, control unit 11 registers schedule data in schedule list 121, whose event is "reply" and whose start time is the time identified at step Sa9.

The foregoing is a description of the operation performed when a response is made to an incoming call using a speech operation.

It is to be noted that in the above operation, the processing of step Sa12 may be performed prior to the processing of step Sa10 or Sa11.

According to the embodiment described in the foregoing, when a phone conversation cannot be started in response to an incoming call, a time when a reply can be made is identified based on schedule data, and voice data of a response sentence notifying that a reply will be made at the identified time is sent to a communication device of a caller. Namely, according to the present embodiment, when a phone conversation cannot be started in response to an incoming call, a time for reply is notified to a caller.

### 2. Modifications

The above embodiment may be modified as described below. The following modifications may be combined with each other.

### 2-1. Modification 1

In the above embodiment, where a speech recognition processing is performed in speech recognition server 2, such a processing may be performed in communication terminal 1. Specifically, storage unit 12 of communication terminal 1 may store speech recognition DBs 221, and control unit 11 of communication terminal 1 may perform a speech recognition processing based on feature amount data.

In the above embodiment, where a processing for extracting a feature amount from speech data is performed by communication terminal 1, such a processing may be performed by speech recognition server 2. In that case, control unit 11 of communication terminal 1 may send speech data acquired from voice processing unit 15 to speech recognition server 2, and control unit 21 of speech recognition server 2 may extract a feature amount from the speech data, and perform a speech recognition processing based on feature amount data representing the feature amount.

In the above embodiment, where schedule list 121, phonebook data 122, and operation list 123 are stored in storage unit 12 of communication terminal 1, at least one of them may be stored in a storage device of an external device, and communication terminal 1 may access the storage device.

### 2-2. Modification 2

In the above embodiment, schedule data corresponding to a present date and time is identified, and an end time of the schedule data is identified as a time for reply (see steps Sa8 and Sa9 of Fig. 10). However, a time obtained by adding a predetermined time to an end time of schedule data may be identified as a time for reply. For example, in a case where an end time of schedule data is "11:00," a time "11:10" may be identified as a time for reply. A predetermined time to be added to an end time may be pre-set by a user.

Alternatively, a predetermined time to be added to an end time may be changed in accordance with a speech input by a user. For example, in a case where a speech input by a user is "busy right now," a predetermined time to be added may be ten minutes, while in a case where a speech input by a user is "busy today," a predetermined time to be added may be 24 hours. In the case, communication terminal 1 may be provided with a table where sets of a speech input by a user (specifically, a text obtained as a result of speech recognition of the speech) and a time to be added are stored, and may identify, with reference to the table, a time to be added corresponding to a text represented by text data sent from speech recognition server 2.

### 2-3. Modification 3

In the above embodiment, where a time of day for reply is identified, and the time is notified to a caller (see steps Sa9 and Sa10 of Fig. 10), a time period may be notified to a caller, instead of a time of day. For example, a time zone such as morning or afternoon, or a time period such as a date, a day of the week, or a week may be notified to a caller. For example, in the above embodiment, in a case where an end time of schedule data corresponding to a present date and time is "13:00," a time "afternoon" may be identified as a time for reply. In another instance, in the above embodiment, in a case where an end time of schedule data corresponding to a present date and time is "1:00," a time "the next day" may be identified as a time for reply.

### 2-4. Modification 4

In the above embodiment, where only a time for reply is notified to a caller (see step Sa10 of Fig. 10), a situation that a user of communication terminal 1 is in may be notified to a caller, in addition to a time for reply. For example, in a case where a user is in a meeting, a response sentence "The call cannot be answered at the moment because a user is in a meeting. A reply will be made at eleven." may be notified to a caller.

For example, storage unit 12 of communication terminal 1 may store a template of voice data of a response sentence "The call cannot be answered at the moment because a user is in %E. A reply will be made at %T," and communication terminal 1 may embed voice data indicative of an event in the parameter of an event "%E" of the template to generate voice data of a response sentence. An event herein may be identified based on a category of schedule data. Alternatively, an event may be identified based on a speech input by a user (specifically, a text obtained as a result of speech recognition of the speech).

### 2-5. Modification 5

In the above embodiment, where an event "reply" is registered in schedule list 121 as schedule data after a time for reply is notified to a caller (see step Sa12 of Fig. 10), communication terminal 1 may be provided with an alarm function to remind a user of the event "reply." For example, communication terminal 1 may be provided with a notification means for reminding a user of an event "reply," which may include a light-emitting device such as an LED (Light Emitting Diode) or a vibrating device that generates vibration by rotating an eccentric cam, and may active the notification means at a time for reply, or a predetermined time period prior to the time. Alternatively, communication terminal 1 may display, on display unit 14, an image for reminding a user of an event "reply."

### 2-6. Modification 6

In the above embodiment, schedule data corresponding to a present date and time is identified, and an end time of the schedule data is identified as a time for reply (see steps Sa8 and Sa9 of Fig. 10). However, in a case where no schedule data corresponding to a present date and time is registered in schedule list 121, a time for reply may not be identified, and voice data of a fixed response sentence may be sent to a caller. A fixed response sentence may be a message "The call cannot be answered at the moment."

### 2-7. Modification 7

In the above embodiment, a processing for registering an event "reply" in schedule list 121 (see step Sa12 of Fig. 10) may be performed only when a request for reply is received from a caller. For example, the processing may be performed only when a predetermined operation to request for reply is performed in a communication device of a caller after voice data of a response sentence is sent to the communication device, and a signal indicative of the operation is received by communication terminal 1.

### 2-8. Modification 8

In the above embodiment, in a case where display data representing a screen for the scheduler is described in CHTML (Compact HyperText Markup Language), a tag for providing a phone-to function may be added to a phone number to which a reply is made. For example, in a case where an event of schedule data displayed by the scheduler is "Reply to "090-1111-1111,"" a tag for providing a phone-to function may be added to the character string "090-1111-1111." As a result, a phone number for reply displayed by the scheduler becomes available for selection as a link, selection of which link triggers originating a call to the phone number.

In the above embodiment, a name of a user to which a reply is made may be registered in schedule list 121, instead of a phone number for reply. For example, an event "Reply to Taro Yamada" may be registered in schedule list 121, instead of an event "Reply to "090-1111-1111."" In this case, control unit 11 of communication terminal 1 may identify a name of a user associated with a phone number of a caller with reference to phonebook data 122. When an event is displayed by the scheduler, a tag for providing a phone-to function may be added to the character string "Taro Yamada."

### 2-9. Modification 9

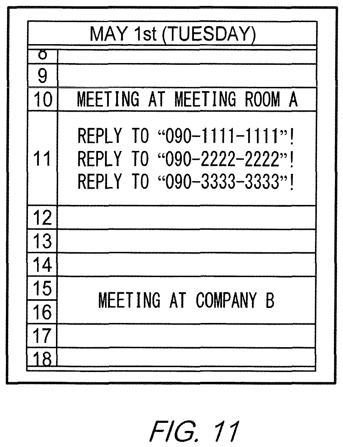

In the above embodiment, in a case where plural calls are received during a single event, and schedule data of a reply to each call is registered, the items of schedule data may be displayed in order of arrival of the calls. Fig. 11 is a diagram showing an example of a screen displayed on display unit 14 when such a modification is employed. In another instance, the display order of the items of schedule data may depend on categories associated with phone numbers for reply in phonebook data 122. For example, in a case where a setting is pre-configured such that a business category is preferentially displayed, schedule data having an event "Reply to "090-3333-3333"" is preferentially displayed in the case of the example shown in Fig. 5.

### 2-10. Modification 10

A program executed by control unit 11 of communication terminal 1 in the above embodiment may be provided to communication terminal 1 via a computer-readable recording medium. The recording medium may include: a magnetic recording medium such as a magnetic tape or a magnetic disk; an optical recording medium such as an optical disk; a magnet-optical recording medium; and a semiconductor memory. Alternatively, the program may be provided to communication terminal 1 via a network such as the Internet.

### 2-11. Modification 11

The above embodiment relates especially to an operation for responding to an incoming call using a speech operation; therefore, only operations that may be performed in response to an incoming call are registered in operation list 123. However, operations that may be performed in other situations may be registered. In this case, not only a text obtained as a result of speech recognition of a user's speech, but also data on an operational state of communication terminal 1 may be registered in operation list 123 in association with an operation. An operational state of communication terminal 1 herein may include an operational state of receiving a call.

In this case, control unit 11 of communication terminal 1, at step Sa5 of Fig. 10 according to the above embodiment, may identify an operation based on not only a text represented by acquired text data, but also an identified operational state of communication terminal 1 with reference to operation list 123.

In the above embodiment, where communication terminal 1 includes operation list 123, and identifies a speech operation, speech recognition server 2 may identify a speech operation. In the case, storage unit 22 of speech recognition server 2 may store operation list 123 where sets of a text obtained as a result of speech recognition of a user's speech, an operational state of communication terminal 1, and an operation are registered. Communication terminal 1 may send speech data acquired from voice processing unit 15 and data on an operational state of the terminal, which have been compressed, to speech recognition server 2.

Control unit 21 of speech recognition server 2 may extract a feature amount from the received speech data, and perform a speech recognition processing based on feature amount data representing the feature amount. Subsequently, control unit 21 may identify, with reference to operation list 123, a speech operation based on a text obtained as a result of the speech recognition processing and the operational state of communication terminal 1. Data on the identified speech operation may be sent to communication terminal 1, which may determine based on the data whether the speech operation is an operation for requesting starting a phone conversation in response to an incoming call (see step Sa6 of Fig. 10).

### 2-12. Modification 12

In the above embodiment, where voice data of a response sentence is sent to a communication device of a caller, an email or SMS (Short Message Service) message indicative of the response sentence may be sent to the communication device. Especially, in a case where a call is disconnected by a communication device of a caller before or while voice data of a response sentence sent to the communication device is reproduced, an email or SMS message indicative of the response sentence may be sent to the communication device.

### 2-13. Modification 13

In the above embodiment, where a response is made to an incoming call in response to a speech operation performed by a user, a response to an incoming call may be performed in response to an operation performed relative to instruction input unit 13. For example, in a case where a predetermined operation is performed relative to instruction input unit 13 while an alert screen for informing an incoming call is displayed on display unit 14, control unit 11 of communication terminal 1 may perform the processing of step Sa8 of Fig. 10 and the subsequent processings.

In another instance, in the above embodiment, in a case where no operation is performed by a user, and a predetermined condition is met, a response to an incoming call may be performed. For example, in a case where no operation is performed by a user relative to instruction input unit 13 for a given time period after an alert screen is displayed, control unit 11 may automatically may perform the processing of step Sa8 of Fig. 10 and the subsequent processings.

### 2-14. Modification 14

In modification 5, if no reply is made after a predetermined number of notifications are performed by the notification means, an email may automatically be sent to a caller. Specifically, control unit 11 of communication terminal 1 may initially determine whether a reply has been made, at predetermined intervals after a user has been reminded of an event. For example, control unit 11 may determine whether a reply has been made with reference to an origination/transmission history stored in storage unit 12 of communication terminal 1.

If a reply has not been made, control unit 11 may remind a user of the event again. If a predetermined number of reminders have been performed, control unit 11 may automatically send an email to a caller, requesting that a caller state his/her business, or notifying the caller of a later reply.

### Description of Reference Numerals

1 ··· Communication terminal, 2 ··· Speech recognition server, 3 ··· Communication line, 11 ··· Control unit, 12 ··· Storage unit, 13 ··· Instruction input unit, 14 ··· Display unit, 15 ··· Voice processing unit, 16 ··· Communication unit, 17 ··· Bus, 21 ··· Control unit, 22 ··· Storage unit, 23 ··· Communication unit, 24 ··· Bus, 41 ··· Speech data acquiring unit, 42 ··· Feature amount extracting unit, 43 ··· Feature amount data sending unit, 44 ··· Text data acquiring unit, 45 ··· Operation identifying unit, 46 ··· Schedule data identifying unit, 47 ··· Reply date/time identifying unit, 48 ··· Response sentence data generating unit, 49 ··· Response sentence data sending unit, 50 ··· Schedule data registering unit, 100 ··· Communication system, 121 ··· Schedule list, 122 ··· Phonebook data, 123 ··· Operation list, 221 ··· Speech recognition DBs.

## Claims

1. A communication terminal (1) comprising:
an identifying means (47) for identifying a time when a reply will be made to a received call, with reference to schedule data (121) stored in a storage means (12), upon detecting that a predetermined condition has been met after the call has been received;
a generating means (48) for generating response sentence data representing a response sentence informing that a reply will be made at the time identified by the identifying means (47); and
a first sending means (49) for sending the response sentence data generated by the generating means (48) to a communication device that has originated the call,
further comprising a storage control means (50) for storing schedule data in the storage means (12), the schedule data including a set of time data representing the time identified by the identifying means (47), and event data representing a reply to the communication device that has originated the call,
a notification means for reminding a user of the event represented by the event data stored by the storage control means (50); and
a second sending means for sending response sentence data representing a predetermined response sentence to the communication device that has originated the call, upon detecting that a reply has not been made to the communication device after a predetermined number of notifications have been performed by the notification means.

2. The communication terminal (1) according to Claim 1, further comprising:
a voice collecting means (15); and
an acquiring means (41) for acquiring speech data representing a speech collected by the voice collecting means (15), the identifying means (47) identifying the time upon detecting that an operation identified by performing a speech recognition processing on the speech data acquired by the acquiring means (41) is an operation for requesting sending of response sentence data.

3. The communication terminal (1) according to Claim 1, wherein the storage control unit (50) stores the schedule data in the storage means (12) only upon detecting that a signal has been received from the communication device that has originated the call, the signal requesting a reply to the call.

4. A control method for a communication terminal (1), comprising:
an identifying step of identifying a time when a reply will be made to a received call with reference to schedule data stored in a storage means, upon detecting that a predetermined condition has been met since the call was received;
a generating step of generating response sentence data representing a response sentence notifying that a reply will be made at the time identified at the identifying step; and
a first sending step of sending the response sentence data generated at the generating step to a communication device that has originated the call,
a storing step of storing schedule data, the schedule data including a set of time data representing the identified time, and event data representing a reply to the communication device that has originated the call,
a notification step for reminding a user of the event represented by the stored event data; and
a second sending step for sending response sentence data representing a predetermined response sentence to the communication device that has originated the call, upon detecting that a reply has not been made to the communication device after a predetermined number of notifications have been performed.

5. A program for causing a computer to execute:
an identifying step of identifying a time when a reply will be made to a received call with reference to schedule data stored in a storage means, upon detecting that a predetermined condition has been met after the call was received;
a generating step of generating response sentence data representing a response sentence notifying that a reply will be made at the time identified at the identifying step; and
a sending step of sending the response sentence data generated at the generating step to a communication device that has originated the call,
a storing step of storing schedule data, the schedule data including a set of time data representing the identified time, and event data representing a reply to the communication device that has originated the call,
a notification step for reminding a user of the event represented by the stored event data; and
a second sending step for sending response sentence data representing a predetermined response sentence to the communication device that has originated the call, upon detecting that a reply has not been made to the communication device after a predetermined number of notifications have been performed.

## Patentansprüche

1. Kommunikationsendgerät (1), umfassend:
ein Identifizierungsmittel (47) zum Identifizieren eines Zeitpunkts, zu dem eine Erwiderung auf einen empfangenen Anruf getätigt werden wird, unter Bezugnahme auf Zeitplandaten (121), die in einem Speichermittel (12) gespeichert sind, bei einem Detektieren, dass eine vorbestimmte Bedingung erfüllt wurde, nachdem der Anruf empfangen wurde;
ein Generierungsmittel (48) zum Generieren von Antwortsatzdaten, die einen Antwortsatz repräsentieren, der anzeigt, dass eine Erwiderung zu dem durch das Identifizierungsmittel (47) identifizierten Zeitpunkt getätigt werden wird; und
ein erstes Sendemittel (49) zum Senden der von dem Generierungsmittel (48) generierten Antwortsatzdaten an eine Kommunikationsvorrichtung, von der der Anruf ausgegangen ist,
ferner umfassend ein Speichersteuermittel (50) zum Speichern von Zeitplandaten in dem Speichermittel (12), wobei die Zeitplandaten einen Satz von Zeitdaten, die den von dem Identifizierungsmittel (47) identifizierten Zeitpunkt repräsentieren, und Ereignisdaten, die eine Erwiderung an die Kommunikationsvorrichtung, von der der Anruf ausgegangen ist, repräsentieren, umfassen,
ein Benachrichtigungsmittel zum Erinnern eines Nutzers an das Ereignis, das durch die Ereignisdaten, die durch das Speichersteuermittel (50) gespeichert wurden, repräsentiert wird; und
ein zweites Sendemittel zum Senden von einen vorbestimmten Antwortsatz repräsentierenden Antwortsatzdaten an die Kommunikationsvorrichtung, von der der Anruf ausgegangen ist, bei einem Detektieren, dass keine Erwiderung an die Kommunikationsvorrichtung getätigt wurde, nachdem eine vorbestimmte Anzahl von Benachrichtigungen von dem Benachrichtigungsmittel ausgeführt wurde.

2. Kommunikationsendgerät (1) nach Anspruch 1, ferner umfassend:
ein Stimmenaufnahmemittel (15); und
ein Erfassungsmittel (41) zum Erfassen von Sprachdaten, die eine Sprachäußerung repräsentieren, die von dem Stimmenaufnahmemittel (15) aufgenommen wurde, wobei das Identifizierungsmittel (47) den Zeitpunkt bei einem Detektieren, dass eine Operation, die durch ein Durchführen einer Spracherkennungsverarbeitung an den von dem Erfassungsmittel (41) erfassten Sprachdaten identifiziert wurde, eine Operation zum Anfordern eines Sendens von Antwortsatzdaten ist, identifiziert.

3. Kommunikationsendgerät (1) nach Anspruch 1, wobei die Speichersteuereinheit (50) die Zeitplandaten nur bei einem Detektieren, dass ein Signal von der Kommunikationsvorrichtung, von der der Anruf ausgegangen ist, empfangen wurde, in dem Speichermittel (12) speichert, wobei das Signal eine Erwiderung auf den Anruf anfordert.

4. Steuerverfahren für ein Kommunikationsendgerät (1), umfassend:
einen Identifizierungsschritt zum Identifizieren eines Zeitpunkts, zu dem eine Erwiderung auf einen empfangenen Anruf getätigt werden wird, unter Bezugnahme auf Zeitplandaten, die in einem Speichermittel gespeichert sind, bei einem Detektieren, dass eine vorbestimmte Bedingung erfüllt wurde, seit der Anruf empfangen wurde;
einen Generierungsschritt zum Generieren von Antwortsatzdaten, die einen Antwortsatz repräsentieren, der anzeigt, dass eine Erwiderung zu dem in dem Identifizierungsschritt identifizierten Zeitpunkt getätigt werden wird; und
einen ersten Sendeschritt zum Senden der in dem Generierungsschritt generierten Antwortsatzdaten an eine Kommunikationsvorrichtung, von der der Anruf ausgegangen ist,
einen Speicherschritt zum Speichern von Zeitplandaten, wobei die Zeitplandaten einen Satz von Zeitdaten, die den identifizierten Zeitpunkt repräsentieren, und Ereignisdaten, die eine Erwiderung an die Kommunikationsvorrichtung, von der der Anruf ausgegangen ist, repräsentieren, umfassen,
einen Benachrichtigungsschritt zum Erinnern eines Nutzers an das durch die gespeicherten Ereignisdaten repräsentierte Ereignis; und
einen zweiten Sendeschritt zum Senden von einen vorbestimmten Antwortsatz repräsentierenden Antwortsatzdaten an die Kommunikationsvorrichtung, von der der Anruf ausgegangen ist, bei einem Detektieren, dass keine Erwiderung an die Kommunikationsvorrichtung getätigt wurde, nachdem eine vorbestimmte Anzahl von Benachrichtigungen ausgeführt wurden.

5. Programm zum Bewirken, dass ein Computer ausführt:
einen Identifizierungsschritt zum Identifizieren eines Zeitpunkts, zu dem eine Erwiderung auf einen empfangenen Anruf getätigt werden wird, unter Bezugnahme auf Zeitplandaten, die in einem Speichermittel gespeichert sind, bei einem Detektieren, dass eine vorbestimmte Bedingung erfüllt wurde, nachdem der Anruf empfangen wurde;
einen Generierungsschritt zum Generieren von Antwortsatzdaten, die einen Antwortsatz repräsentieren, der darüber benachrichtigt, dass eine Erwiderung zu dem in dem Identifizierungsschritt identifizierten Zeitpunkt getätigt werden wird; und
einen Sendeschritt zum Senden der in dem Generierungsschritt generierten Antwortsatzdaten an eine Kommunikationsvorrichtung, von der der Anruf ausgegangen ist,
einen Speicherschritt zum Speichern von Zeitplandaten, wobei die Zeitplandaten einen Satz von Zeitdaten, die den identifizierten Zeitpunkt repräsentieren, und Ereignisdaten, die eine Erwiderung an die Kommunikationsvorrichtung, von der der Anruf ausgegangen ist, repräsentieren, umfassen,
einen Benachrichtigungsschritt zum Erinnern eines Nutzers an das durch die gespeicherten Ereignisdaten repräsentierte Ereignis; und
einen zweiten Sendeschritt zum Senden von einen vorbestimmten Antwortsatz repräsentierenden Antwortsatzdaten an die Kommunikationsvorrichtung, von der der Anruf ausgegangen ist, bei einem Detektieren, dass keine Erwiderung an die Kommunikationsvorrichtung getätigt wurde, nachdem eine vorbestimmte Anzahl von Benachrichtigungen ausgeführt wurde.

## Revendications

1. Terminal de communication (1) comprenant :
un moyen d'identification (47) pour identifier un instant où une réponse sera faite à un appel reçu, en se référant à des données de calendrier (121) stockées dans un moyen de stockage (12), lors de la détection qu'une condition prédéterminée a été satisfaite après que l'appel a été reçu ;
un moyen de production (48) pour produire des données de phrase de réponse représentant une phrase de réponse informant qu'une réponse sera faite à l'instant identifié par le moyen d'identification (47) ; et
un premier moyen d'envoi (49) pour envoyer les données de phrase de réponse produites par le moyen de production (48) à un dispositif de communication qui a été à l'origine de l'appel,
comprenant en outre un moyen de commande de stockage (50) pour stocker des données de calendrier dans le moyen de stockage (12), les données de calendrier incluant un ensemble de données temporelles représentant l'instant identifié par le moyen d'identification (47), et des données d'événement représentant une réponse au dispositif de communication qui a été à l'origine de l'appel,
un moyen de notification pour rappeler à un utilisateur l'événement représenté par les données d'événement stockées par le moyen de commande de stockage (50) ; et
un second moyen d'envoi pour envoyer des données de phrase de réponse représentant une phrase de réponse prédéterminée au dispositif de communication qui a été à l'origine de l'appel, lors de la détection qu'une réponse n'a pas été faite au dispositif de communication après qu'un nombre prédéterminé de notifications ont été effectuées par le moyen de notification.

2. Terminal de communication (1) selon la revendication 1, comprenant en outre :
un moyen collecteur de voix (15) ; et
un moyen d'acquisition (41) pour acquérir des données de parole représentant une parole collectée par le moyen collecteur de voix (15), le moyen d'identification (47) identifiant l'instant de la détection qu'une opération identifiée en effectuant un traitement de reconnaissance de la parole sur les données de parole acquises par le moyen d'acquisition (41) est une opération pour demander l'envoi de données de phrase de réponse.

3. Terminal de communication (1) selon la revendication 1, dans lequel l'unité de commande de stockage (50) stocke les données de calendrier dans le moyen de stockage (12) seulement lors de la détection qu'un signal a été reçu en provenance du dispositif de communication qui a été à l'origine de l'appel, le signal demandant une réponse à l'appel.

4. Procédé de commande pour un terminal de communication (1), comprenant :
une étape d'identification consistant à identifier un instant où une réponse sera faite à un appel reçu en se référant à des données de calendrier stockées dans un moyen de stockage, lors de la détection qu'une condition prédéterminée a été satisfaite depuis que l'appel a été reçu ;
une étape de production consistant à produire des données de phrase de réponse représentant une phrase de réponse notifiant qu'une réponse sera faite à l'instant identifié à l'étape d'identification ; et
une première étape d'envoi consistant à envoyer les données de phrase de réponse produites à l'étape de production vers un dispositif de communication qui a été à l'origine de l'appel,
une étape de stockage consistant à stocker des données de calendrier, les données de calendrier incluant un ensemble de données temporelles représentant l'instant identifié, et des données d'événement représentant une réponse au dispositif de communication qui a été originaire de l'appel,
une étape de notification pour rappeler à un utilisateur l'événement représenté par les données d'événement stockées ; et
une seconde étape d'envoi pour envoyer des données de phrase de réponse représentant une phrase de réponse prédéterminée au dispositif de communication qui a été originaire de l'appel, lors de la détection qu'une réponse n'a pas été faite au dispositif de communication après qu'un nombre prédéterminé de notifications ont été effectuées.

5. Programme pour amener un ordinateur à exécuter :
une étape d'identification consistant à identifier un instant où une réponse sera faite à un appel reçu en se référant à des données de calendrier stockées dans un moyen de stockage, lors de la détection qu'une condition prédéterminée a été satisfaite après que l'appel a été reçu ;
une étape de production consistant à produire des données de phrase de réponse représentant une phrase de réponse notifiant qu'une réponse sera faite à l'instant identifié à l'étape d'identification ; et
une étape d'envoi consistant à envoyer les données de phrase de réponse produites à l'étape de production vers un dispositif de communication qui a été originaire de l'appel,
une étape de stockage consistant à stocker des données de calendrier, les données de calendrier incluant un ensemble de données temporelles représentant l'instant identifié, et des données d'événement représentant une réponse au dispositif de communication qui a été à l'origine de l'appel,
une étape de notification pour rappeler à un utilisateur l'événement représenté par les données d'événement stockées ; et
une seconde étape d'envoi pour envoyer des données de phrase de réponse représentant une phrase de réponse prédéterminée au dispositif de communication qui a été à l'origine de l'appel, lors de la détection qu'une réponse n'a pas été faite au dispositif de communication après qu'un nombre prédéterminé de notifications ont été effectuées.
